# EUROPÄISCHE PATENTANMELDUNG

(11) **EP 2 228 330 A2**
(43) Veröffentlichungstag der Anmeldung: **15.09.2010**
(21) Anmeldenummer: 10150489.2
(22) Anmeldetag: 12.01.2010
(51) Int. Cl.: B65G 49/08

(54) **Vorrichtung und Verfahren zum Beladen oder Entladen von Formlingsträgern und Formlingsträger für Formlinge, insbesondere aus einem plastisch verformbaren Material**

(30) Priorität: 13.03.2009 DE 102009013006
(71) Anmelder: Hans Lingl Anlagenbau und Verfahrenstechnik GmbH & Co. KG, 86381 Krumbach (DE)
(72) Erfinder: Darcis, Gerhard, 73349, Wiesensteig (DE); Simmnacher, Franz, 86513, Ursberg-Mindelzell (DE); Schweiggart, Markus, 89284, Pfaffenhofen (DE)
(74) Vertreter: Körber, Martin Hans

(57) **Zusammenfassung**

Die Erfindung betrifft eine Vorrichtung (1) zum Beladen eines Formlingsträgers (6) mit Formlingen (3), mit einer Formling-Fördereinrichtung (2) zum etwa horizontalen Zufördern von Formlingen (3) zu einer Beladestation (4a), einem Formlingsträger-Förderer (5) zum Zufördern eines Formlingsträgers (6) zur Beladestation (4a) und einem weiteren Formlingsträger-Förderer (8) zum Abfördern eines beladenen Formlingsträgers (6) von der Beladestation (4a). Um eine sichere und störungsfreie Beladung zu erreichen, ist der Formlingsträger-Förderer (5) ein Vertikalförderer, dessen Förderelement (5a) aus einer unterhalb der Beladestation (4a) angeordneten unteren Hubstellung (5u) in eine obere Hubstellung (5o) bewegbar ist, in der die Tragfläche (6a) des vom Förderelement (5a) getragenen Formlingsträgers (6) gleich hoch oder höher angeordnet ist als die Tragebene (2h) der Formling-Fördereinrichtung (2).

## Beschreibung

Die Erfindung betrifft eine Vorrichtung und ein Verfahren zum Beladen oder Entladen eines Formlingsträgers mit bzw. von Formlingen oder einen Formlingsträger für Formlinge, insbesondere aus einem plastisch verformbaren Material.

Formlinge bedürfen während ihres Herstellungsprozesses oder auch bei ihrer späteren Handhabung für ihre Lagerung oder für ihren Gebrauch einer Förderung. Dabei ist es üblich und in vielen Fällen auch erforderlich, einen Formling oder eine Mehrzahl Formlinge nicht direkt zu ergreifen und zu fördern, sondern mittels eines Formlingsträgers, auf den der oder die Formlinge aufgesetzt wird bzw. werden. Letzteres ist dann sogar notwendig, wenn die Formlinge zumindest vorrübergehend nicht direkt ergreifbar sind, weil sie durch das direkte Ergreifen beeinträchtigt werden könnten, zum Beispiel wenn durch das Ergreifen Beschädigungen oder Gebrauchsspuren an ihnen erzeugt werden. Dies ist zum Beispiel dann der Fall, wenn die Formlinge durch die Herstellungsvorgänge Strangpressen oder Formen in einer Form erzeugt werden, wie es zum Beispiel dann der Fall ist, wenn es sich um Formlinge der Bauindustrie handelt, die aus einem plastischen, strangpressfähigen oder formbaren Material hergestellt werden, wozu sich keramische oder plastisch verformbare Materialien eignen. Ein typisches Beispiel dafür sind Bauelemente wie Ziegelsteine, Dachpfannen sowie große und kleine plattenförmige Bauelemente wie Fliesen oder Fasadenplatten. Vor einem Trocknungs- oder Brennvorgang sind solche Formlinge weich und nass, so dass sie nur in einer auf einem Formlingsträger liegenden Position gefördert werden können.

Je nach Größe der Formlinge und der Formlingsträger ist es möglich, einen Formlingsträger jeweils nur mit einem oder mit mehreren Formlingen zu beladen bzw. zu entladen. Bei der Förderung von Fassadenplatten ist es wegen ihrer beträchtlichen Größe möglich, einen Formlingsträger mit nur einem Formling zu beladen.

Formlingsträger können zum Beispiel flache Tragkörper sein, auf denen die Formlinge abgesetzt werden. In der Fachsprache werden solche Tragkörper zumindest in der Herstellungsindustrie für Bauelemente aus keramischem oder ähnlichem Material mit Kassetten bezeichnet.

Der Erfindung liegt die Aufgabe zugrunde, eine Vorrichtung und ein Verfahren zum Beladen mit Formlingen oder Entladen von Formlingen so weiterzubilden, dass ein sicherer und störungsfreier Beladungs- bzw. Entladungsvorgang erreicht wird. Ferner soll insbesondere beim Beladen und gegebenenfalls auch beim Entladen eine schonende Beanspruchung des bzw. der Formlinge erfolgen. Außerdem soll eine Formlingsträger-Ausgestaltung gefunden werden, die sich für die erfindungsgemäßen Vorrichtungen und die erfindungsgemäßen Verfahren eignen.

Diese Aufgabe wird durch die Merkmale der Ansprüche 1, 2, 14, 15, 16 und 17 gelöst. Vorteilhafte Weiterbildungen der Erfindung sind in zugehörigen Unteransprüchen beschrieben.

Den erfindungsgemäßen Lösungen ist gemeinsam, dass der Formling beim Beladen oder Entladen ausschließlich unterseitig beansprucht wird, nämlich an seiner Standfläche, an der der Formling zum einen weniger empfindlich ist und zum anderen Beschädigungen und Gebrauchsspuren unerheblich bzw. unschädlich sind.

Außerdem erfolgt bei den erfindungsgemäßen Lösungen eine sichere und störungsfreie Behandlung der Formlinge, weil die Formlinge fortwährend auf ihrer Standfläche stehenbleiben und nicht durch ein irgendwie anders gestaltetes Ergreifen umgesetzt werden.

Die erfindungsgemäßen Vorrichtungen und Verfahren sind insbesondere dann vorteilhaft, wenn beim Beladen die Formlinge mit dem zu beladenden Formlingsträger von der Förder- bzw. Tragebene des zugehörigen Zuführungs-Förderers abgehoben werden und beim Entladen den Wegführungs-Förderer durch ein Absetzen von oben übergeben werden. Diese erfindungsgemäßen Maßnahmen lassen sich problemlos unabhängig von der Bewegung des zugehörigen Zuführungs- und Wegführungs-Förderers durchführen und sie eignen sich insbesondere für empfindliche Formlinge, die zum Beispiel noch nicht verfestigt sind, zum Beispiel durch Trocknen oder Brennen.

Die erfindungsgemäßen Lösungen eignen sich jedoch auch in den Fällen, in denen die Formlinge beim Beladen dem zugehörigen Zuführungs-Förderer und beim Entladen dem zugehörigen Wegführungs-Förderer jeweils in dessen Trag- bzw. Förderebene übergeben werden, wenn der jeweilige Förderer gleichzeitig und mit gleicher Geschwindigkeit mit bewegt wird. Außerdem eignen sich diese erfindungsgemäßen Lösungen auch für solche Formlinge, die unempfindlich sind und zum Beispiel nach deren Verfestigung, zum Beispiel durch Trocknen oder Brennen, gefördert werden.

Die erfindungsgemäßen Vorrichtungen und Verfahren eignen sich insbesondere dann besonders vorteilhaft, wenn Formlingsträger verwendet werden, die jeweils mehrere in Querabständen voneinander angeordnete Tragleisten aufweisen oder mit diesen Tragleisten gabelförmig ausgebildet sind und eine Traggabel bilden. Solche Formlingsträger eignen sich dazu, zum einen die Formlinge dadurch sicher zu unterstützen und zu tragen, dass wenigstens zwei Tragleisten einen Formling oder eine Längsreihe Formlinge tragen, wobei zwischen den Tragleisten Freiräume vorhanden sind, die ein kammförmiges Ineinandergreifen mit einem Zuführungs-Förderer beim Beladen und einem Wegführungs-Förderer beim Entladen gewährleisten.

Die lösungsgemäßen Vorrichtungen und Verfahren eignen sich insbesondere dann besonders vorteilhaft, wenn eine Formlingsträgerkombination bzw. eine Formlingsträgeranordnung verwendet wird, die jeweils aus einem Basisträgerteil und wenigstens einem darauf absetzbaren oder darin einsetzbaren Formlingsträgerteil besteht, dass den wenigstens einen Formling trägt. Eine solche Formlingsträgerkombination ermöglicht die Vorrichtung dahingehend zu erweitern, dass sie sich sowohl zum Beladen als auch zum Entladen besser eignet.

Vorteilhafte Ausgestaltungen der in den Ansprüchen 1 und 2 definierten erfindungsgemäßen Vorrichtungen sind im Folgenden aufgeführt. Vorteilhafterweise weist die Formling-Fördereinrichtung eine Mehrzahl langgestreckter und nebeneinander angeordneter Tragelemente zum Tragen der Formlinge an der Beladestation auf, zwischen denen Freiräume angeordnet sind, und der Formlingsträger weist mehrere nebeneinander angeordnete Tragleisten für die Formlinge auf, die in die Freiräume passen.

Vorteilhafter Weise greifen die Tragelemente der Formling-Fördereinrichtung und die Förderelemente des vertikalen Formlingsträger-Förderers in der oberen Hubstellung kammförmig ineinander.

Vorteilhafter Weise ist der weitere Formlingsträger-Förderer zum Abfördern eines beladenen Formlingsträgers ein horizontaler oberer Förderer, und vorzugsweise ist seine Förderrichtung etwa parallel zur Zuführ-Förderrichtung der Formling-Fördereinrichtung gerichtet.

Vorteilhafter Weise ist ein weiterer unterer Formlingsträger-Förderer vorgesehen zum horizontalen Zufördern eines unbeladenen Formlingsträgers zum vertikalen Formlingsträger-Förderer in dessen unteren Hubstellung, wobei die Förderrichtung des unteren horizontalen Formlingsträger-Förderers vorzugsweise parallel zur Förderrichtung des oberen horizontalen Formlingsträger-Förderers zum Abfördern eines beladenen Formlingsträgers gerichtet ist.

Vorteilhafter Weise weisen der obere horizontale Formlingsträger-Förderer und der untere horizontale Formlingsträger-Förderer gemeinsame Förderelemente am Förderelement am vertikalen Formlingsträger-Förderers auf.

Vorteilhafter Weise sind die gemeinsamen Förderelemente durch Rollen gebildet.

Vorteilhafter Weise weisen die horizontalen Formlingsträger-Förderer einen gemeinsamen Förderantrieb auf, der wahlweise mit dem zugehörigen Formlingsträger verbindbar ist.

Vorteilhafter Weise ist der gemeinsame Förderantrieb durch wenigstens ein Schub- und Zugelement gebildet, das höhenverstellbar mit dem jeweils zugehörigen Formlingsträger verbindbar ist.

Vorteilhafter Weise ist der gemeinsame Förderantrieb an einem Antriebsrahmen gelagert, der in einem vertikalen Abstand über den oberen horizontalen Formlingsträger-Förderer angeordnet ist.

Vorteilhafter Weise besteht der Formlingsträger aus einem Basisträgerteil und wenigstens einem darauf angeordneten Formlingsträgerteil, das vom Basisträgerteil lösbar, insbesondere abhebbar und wieder absenkbar, ist und oberseitig wenigstens eine Tragfläche für die Formlinge aufweist.

Vorteilhafter Weise ist der Formlingsträger oder das Formlingsträgerteil durch Tragleisten gebildet oder weist Tragleisten auf, die von einer Querverbindung gabelförmig abstehen, wobei die Tragleisten in die Freiräume zwischen den Tragelementen passen.

Vorteilhafte Ausgestaltungen des in Anspruch 16 definierten erfindungsgemäßen Verfahrens sind im Folgenden beschrieben. Vorteilhafter Weise wird der beladene Formlingsträger mittels eines horizontalen Formlingsträger-Förderers weg gefördert, vorzugsweise längs der Zuführ-Förderrichtung der horizontalen Formling-Fördereinrichtung. Vorteilhafter Weise wird der unbeladene Formlingsträger dem vertikalen Formlingsträger-Förderer in dessen unteren Hubstellung mittels eines unteren horizontalen Formlingsträger-Förderers zugefördert. Vorteilhafter Weise werden der beladene und der unbeladene Formlingsträger jeweils bei ihrer Wegförderung von der Beladungsstation und bei ihrer Zuförderung zum vertikalen Formlingsträger-Förderer auf dessen Förderelement horizontal bewegt. Vorteilhafter Weise ist die Verwendung eines Formlingsträgers, der aus einem Basisträgerteil und wenigstens einem darauf angeordneten Formlingsträgerteil besteht, das vom Basisträgerteil abhebbar und wieder absenkbar ist und oberseitig die wenigstens eine Tragfläche für die Formlinge aufweist, wobei das unbeladene Formlingsträgerteil vom Basisträgerteil abgehoben und zum vertikalen Förderer in dessen unteren Hubstellung gefördert wird, mittels diesem in die obere Hubstellung bewegt wird und mittels dem oberen horizontalen Förderer von der Beladestation weggefördert wird und dann auf das Basisträgerteil wieder abgesenkt wird.

Vorteilhafte Ausgestaltungen des in Anspruch 17 definierten erfindungsgemäßen Verfahrens sind im Folgenden definiert. Vorteilhafter Weise werden die an der Entladestelle entladenen Formlinge mittels einer horizontalen Formling-Fördereinrichtung weggefördert. Vorteilhafter Weise wird der beladene Formlingsträger mittels eines horizontalen Formlingsträger-Förderers über den vertikalen Formlingsträger-Förderer gefördert, vorzugsweise längs der Zuführ-Förderrichtung der horizontalen Formling-Fördereinrichtung. Vorteilhafter Weise wird der entladene Formlingsträger vom vertikalen Formlingsträger-Förderer in dessen unteren Hubstellung mittels eines unteren horizontalen Formlingsträger-Förderers weg gefördert, vorzugsweise parallel zur Förderrichtung der horizontalen Formlingsträger-Fördereinrichtung. Vorteilhafter Weise werden der beladene und der entladene Formlingsträger jeweils bei seiner Zuförderung zur Entladungsstation und bei seiner Wegförderung vom vertikalen Formlingsträgers-Förderer auf dessen Förderelement horizontal bewegt. Vorteilhaft ist die Verwendung eines Formlingsträgers, der aus einem Basisträgerteil und wenigstens einem darauf angeordneten Formlingsträgerteil besteht, das vom Basisträgerteil abhebbar und wieder absenkbar ist und oberseitig die wenigstens eine Tragfläche für die Formlinge aufweist, wobei das beladene Formlingsträgerteil vom Basisträgerteil abgehoben und auf den vertikalen Förderer in dessen oberen Hubstellung gefördert wird, mittels diesem in die untere Hubstellung bewegt wird und mittels dem unteren horizontalen Förderer vom vertikalen Förderer weg gefördert wird und dann auf das Basisträgerteil wieder abgesenkt wird.

Der Erfindung liegt im Weiteren die Aufgabe zu Grunde, einen Formlingsträger so auszugestalten, dass er sich zum Beladen mit wenigstens einem Formling oder zum Entladen von wenigstens einem Formling besser eignet, insbesondere in einer lösungsgemäßen Vorrichtung, die zum Beladen oder Entladen eingerichtet ist.

Diese Aufgabe wird durch die Merkmale der unabhängigen Ansprüche 14 und 15 gelöst.

Bei der lösungsgemäßen Ausgestaltung gemäß dem unabhängigen Anspruch 14 weist der Formlingsträger wenigstens zwei oder mehrere jeweils einen Querabstand voneinander aufweisende Tragleisten auf oder diese Tragleisten sind gabelförmige Teile einer Traggabel.

Diese Ausgestaltung ermöglicht ein sicheres Unterstützen und Tragen eines oder mehrerer quer nebeneinander angeordneter Formlinge, wobei in der Querrichtung wenigstens zwei Tragleisten jeweils einen Formling unterstützen und tragen. Die zwischen den Tragleisten vorhandenen Freiräume ermöglichen ein kammförmiges ineinandergreifen der Tragleisten und langgestreckten Förderelementen eines zugehörigen Zuführungs- oder Abführungs-Förderers. Hierdurch ist eine störungsfreie Zuförderung bzw. Abförderung der Formlinge gewährleistet.

Bei der lösungsgemäßen Ausgestaltung gemäß dem unabhängigen Anspruch 15 besteht der Formlingsträger aus einem Basisträgerteil und wenigstens einem darauf angeordneten Formlingsträgerteil, das vom Basisträgerteil abhebbar und wieder absenkbar ist und oberseitig die wenigstens eine Tragfläche für die Formlinge aufweist. Diese Ausgestaltung ermöglicht einen geringen Konstruktions- und Förderaufwand, da die Vorrichtung zur Aufnahme und Förderung nur des Formlingsträgerteils ausgebildet zu sein braucht. Daraus ergibt sich auch eine kleinere und weniger stabile Konstruktion, was zur Kostenersparnis führt.

Zur lösbaren Verbindung eines oder mehrerer einzelner Formlingsträgerteile mit dem Basisträgerteil eignen sich insbesondere formschlüssig wirksame Steckverbindungen, insbesondere von oben zusammenfügbare und nach oben wieder trennbare Steckfassungen.

Vorteilhafte Weiterbildungen der in den Ansprüchen 14 und 15 definierten erfindungsgemäßen Formlingsträger sind im Folgenden beschrieben. Vorteilhafter Weise ist das Formlingsträgerteil in seiner Längs- und/oder Querrichtung durch eine lösbare Verbindungsvorrichtung, insbesondere eine von oben montierbare Steckfassung, gegen ein horizontales Verrutschen positioniert.

Vorteilhafter Weise ist die Steckfassung durch ein oder mehrere sich nach oben erstreckende Fassungselemente gebildet, zwischen denen das Formlingsträgerteil einsteckbar ist oder auf das bzw. auf die das Formlingsträgerteil aufsteckbar ist.

Vorteilhafter Weise ist die wenigstens eine Steckfassung durch einen sich vom Basisträgerteil nach oben erstreckenden Dorn gebildet, auf den ein Teil des Formlingsträgerteils mit einem Steckloch aufsteckbar ist.

Vorteilhafter Weise erstreckt sich vom Basisträgerteil ein Steg nach oben, in dem Steckausnehmungen für das Formlingsträgerteil, insbesondere für dessen Tragleisten, angeordnet sind.

Vorteilhafter Weise weist der Formlingsträger einen Rahmen auf oder ist durch diesen gebildet.

Vorteilhafter Weise ist der Rahmen durch ein Winkelprofil mit einem horizontalen Schenkelstreifen und einem sich von diesem nach oben erstreckenden Schenkelsteg gebildet.

Vorteilhafter Weise sind die Tragleisten durch Hohlprofile der Rohre gebildet, zum Beispiel runden oder etwa viereckigen Querschnitts.

Vorteilhafter Weise sind zwei Formlingsträgerteile oder zwei Formlingsträgerteil-Einheiten nebeneinander angeordnet.

Nachfolgend werden Ausgestaltungen der Erfindung anhand von vereinfachten Zeichnungen und Ausführungsbeispielen näher erläutert. Es zeigt
- Fig. 1: eine erfindungsgemäße Vorrichtung zum Beladen von Formlingsträgern jeweils mit einem Formling oder mehreren Formlingen und/oder zum Entladen jeweils eines Formlings oder mehrerer Formlinge von Formlingsträgern in der Seitenansicht;
- Fig. 2: eine Forrnling-Horizontalfördereinrichtung der Vorrichtung in der Seitenansicht;
- Fig. 3: einen Vertikalförderer zum etwa vertikalen Fördern von Formlingsträgern in der Seitenansicht;
- Fig. 4: eine Antriebseinrichtung für einen Horizontalförderer und einen weiteren Horizontalförderer zum in etwa horizontalen Fördern von Formlingsträgern;

- Fig. 5: einen weiteren Vertikalförderer zum im Wesentlichen vertikalen Fördern von Formlingsträgern in der Seitenansicht;
- Fig. 6: die Vorrichtung gemäß Fig. 1 in der Draufsicht;
- Fig. 7: den Vertikalförderer gemäß Fig. 3 in schematischer Draufsicht;
- Fig. 8: den weiteren Vertikalförderer gemäß Fig. 5 in schematischer Draufsicht;
- Fig. 9: eine Lage Formlinge in einer Formation, wie sie in der Draufsicht auf einen beladenen Formlingsträger sichtbar ist;
- Fig. 10a bis 10d: jeweils einen aus einem Basisträgerteil und wenigstens einem Formlingsträgerteil bestehender Formlingsträger in der Draufsicht in unterschiedlichen Ausgestaltungen;
- Fig.11a bis 11d: jeweils das Basisträgerteil der Formlingsträger gemäß Fig. 10a bis 10d in der Draufsicht;
- Fig. 12a bis 12d: jeweils wenigstens ein Formlingsträgerteil der Formlingsträger gemäß Fig. 10a bis 10d in der Draufsicht;
- Fig. 13: den vertikalen Teilschnitt XIII-XIII in Fig. 10a;
- Fig. 14: den vertikalen Teilschnitt XIV-XIV in Fig. 13;
- Fig. 15: den Grundrahmenabschnitt gemäß Fig. 14 in der Draufsicht;
- Fig. 16: einen der Fig. 13 entsprechenden vertikalen Teilschnitt in abgewandelter Aussichthaltung;
- Fig. 17: den Teilschnitt XVII-XVII in Fig. 16;
- Fig. 18: den Grundrahmenabschnitt gemäß Fig. 17 in der Draufsicht;
- Fig. 19: einen der Fig. 13 entsprechenden vertikalen Teilschnitt in weiter abgewandelter Ausgestaltung;
- Fig. 20: den Teilschnitt XX-XX in Fig. 19;
- Fig. 21: den Grundrahmenabschnitt gemäß Fig. 20 in der Draufsicht.

Bei den nachfolgend beschriebenen Ausführungsbeispielen der Vorrichtung sind gleiche oder vergleichbare Teile mit gleichen Bezugszeichen versehen.

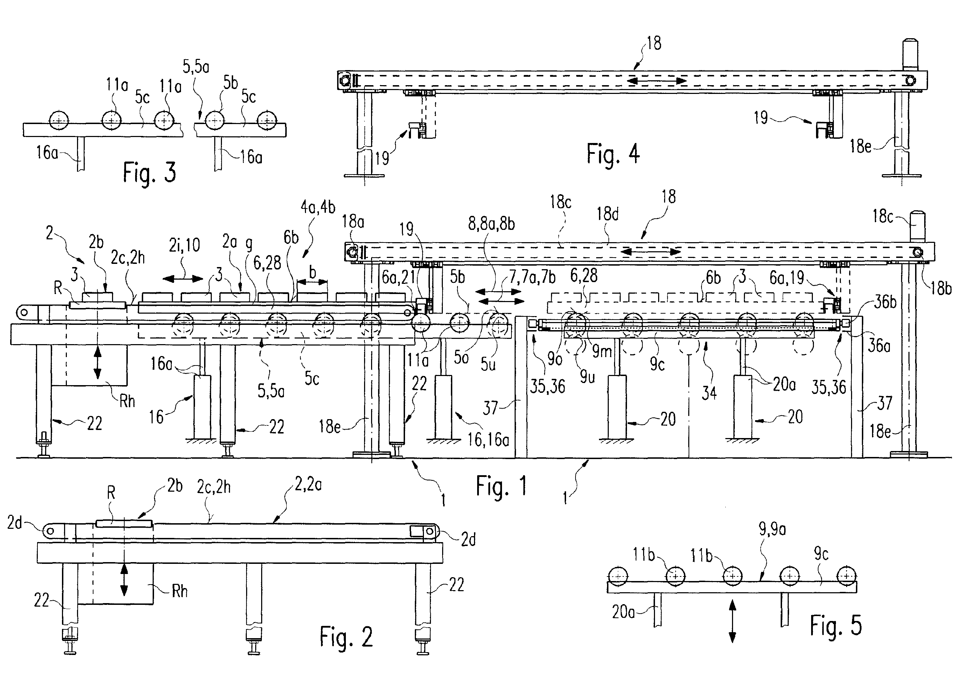

Die Hauptteile der in Fig. 1 im zusammengebauten Zustand dargestellten Vorrichtung 1 sind eine Formling-Horizontalfördereinrichtung 2 zum etwa horizontalen Zufördern und Beladen eines Formlingträgers 6 mit Formlingen 3 an einer Beladestation 4a der Vorrichtung 1 oder zum etwa horizontalen Abfördern der vom Formlingsträger 6 entladenen Formlinge 3 an einer Entladestation 4b, bei der es sich in diesem Funktionsfall um die Beladestation 4a handelt. Hauptteil der Vorrichtung 1 ist auch ein Vertikalförderer 5 zum etwa vertikalen Zufördern eines Formlingsträgers 6 zu seiner Beladung zur Beladestation 4a oder zum etwa vertikalen Abfördern des Formlingträgers 6 zu seiner Entladung an der Entladestation 4b. Ein weiteres Hauptteil der Vorrichtung 1 ist ein Horizontalförderer 7 zum etwa horizontalen Zufördern eines unbeladenen Formlingsträgers 6 zum Vertikalförderer 5 und ein weiterer Horizontalförderer 8 zum etwa horizontalen Abfördern eines beladenen Formlingsträgers 6 von der Beladestation 4a sowie ein weiterer Vertikalförderer 9 zum etwa vertikalen Absenken des Formlingsträgers 6 vom weiteren Horizontalförderer 8 zum Horizontalförderer 7. Der Horizontalförderer 7 und der weitere Horizontalförderer 8 weisen jeweils eine horizontale Führung 7a, 8a auf, zum Führen des Formlingträgers 6 während seiner in die zugehörige Führungsrichtung 7b, 8b gerichteten Bewegung, durch die eine Längsrichtung 10 der Vorrichtung 1 bestimmt ist.

Beim Ausführungsbeispiel sind die Führungen 7a, 8a jeweils durch in der Führungsrichtung 7b, 8b hintereinander angeordnete Rollen 11a, 11b gebildet, die an sich horizontal erstreckenden Tragleisten 5c, 9c der Vertikalförderer 5, 9 drehbar gelagert sind. Die Rollen 11a bzw. 11b und die Tragleisten 5c bzw. 9c bilden jeweils ein Förderelement 5a bzw. 9a des Vertikalförderers 5 bzw. 9.

Die Formlinge 3 sind bei ihrer Förderung zur Vorrichtung 1, in deren Bereich und danach hinreichend stabil unterseitig zu stützen, insbesondere dann, wenn die Formlinge 3 sich in einem Zustand befinden, in dem sie ihre endgültige Festigkeit noch nicht erreicht haben, was unter anderem bei Formlingen der Fall ist, die durch Formen eines plastischen Materials in einer einen hohlen Formraum umschließenden Form hergestellt werden, wie es bei Bauelementen aus keramischem oder ähnlichem Material der Fall ist, zum Beispiel Mauerziegeln, Dachziegeln, Platten und dergleichen, wenn diese Formlinge 3 noch nicht getrocknet, gebrannt oder durch chemisches Abbinden noch nicht erhärtet bzw. verfestigt sind. Gleiches gilt auch für stranggepresste Formlinge 3.

Zum Anderen bedarf es im Flächenbereich der Be- und Entladestation 4a, 4b und des Formlingsträgers 6 in der Längsrichtung 10 der Vorrichtung 1 und quer dazu, insbesondere dann einer Mehrfachunterstützung für die Formlinge 3, wenn deren Anzahl und Abmessungen längs und quer zur jeweiligen Führungsrichtung 7b, 8b unterschiedlich sind.

Bei den vorliegenden Ausführungsbeispielen weisen die einander gleich ausgebildeten Formlingsträger 6 zur unterseitigen Unterstützung der Formlinge 3 Tragleisten 28 auf, die sich längs den Führungsrichtungen 7b, 8b erstrecken, wobei in der horizontalen Querrichtung eine so große Anzahl Tragleisten 28 in einem Querabstand a voneinander angeordnet sind, dass nicht nur bei einer Mehrzahl quer nebeneinander angeordneter Formlinge 3 sondern auch bei einer Anordnung von Formlingen 3 unterschiedlicher Längsabmessungen b und Breitenabmessungen c die Formlinge 3 durch wenigstens zwei Tragleisten 28 immer hinreichend stabil unterstützt sind. Dies gilt nicht nur für die Formlingsträger 6 sondern auch für die Formling-Horizontalfördereinrichtung 2, die im Falle einer Beladung eine Zuführvorrichtung ist und im Falle einer Entladung eine Abführvorrichtung ist. Die Tragleisten 5c, 9c mit den Rollen 11a, 11b sind in Längsreihen unter den Tragleisten 28 angeordnet.

Beim Ausführungsbeispiel besteht die Horizontalfördereinrichtung 2 aus zwei Horizontalförderern 2a, 2b, die quer zueinander gerichtet sind. Im Rahmen der Erfindung können mehrere quer nebeneinander liegende und vorzugsweise auch längst nebeneinander liegende Formlinge 3 längs durch einen entsprechend lang ausgebildeten Horizontalförderer 2a gleichzeitig zugeführt werden. Beim Ausführungsbeispiel werden die Formlinge 3 jeweils in einer Querreihe durch den Horizontalförderer 2b gleichzeitig zugeführt und dem Horizontalförderer 2a übergeben, der die Querreihen im Bereich der Belade- bzw. Entladestation 4a, 4b jeweils im Schritt einer Reihe längs weiterfördert, bis die Querreihen die Belade- und Entladestation 4a, 4b füllen. Die Querförderung der Formlinge 3 bis längs vor die Belade- und Entladestation 4a, 4b kann zum Beispiel durch noch zu beschreibende Rollen erfolgen.

Um die an der Belade- und Entladestation 4a, 4b sowie auf den Formlingsträgern 6 in mehreren Längs- und Querreihen angeordneten Formlinge 3 sicher zu tragen und zu unterstützen, weist der Horizontalförderer 2a eine Vielzahl von langgestreckten und in der Querrichtung nebeneinander angeordneten und nach unten unterstützten Förder-und Tragelementen 2c auf, die zum Beispiel durch endlose Tragbänder gebildet sein können, die um endseitig am Horizontalförderer 2a angeordnete Umlaufscheiben 2d umlaufen, deren Drehachsen sich quer und horizontal erstrecken.

Der Querabstand e zwischen den Tragelementen 2c ist größer als die horizontale Dicke d der Tragleisten 28, wobei auch die Positionen der Tragleisten 28 den Positionen der durch die Abstände gebildeten Freiräume 2e zwischen den Tragelementen 2c entsprechen, so dass der Formlingsträger 6 mit seinen Tragleisten 28 von unten gegen die auf den Tragelementen 2c liegenden Formlinge 3 bewegbar ist, wobei die Tragleisten 28 des jeweiligen Formlingsträgers 6 sich in den Freiräumen 2e zwischen den Tragelementen 2c mit Bewegungsspiel befinden.

Die Anzahl der Tragleisten 28 kann unter Berücksichtigung der Breiten c der Formlinge 3 kleiner sein als die Anzahl der Freiräume 2e. Es kann z. B. nur für jeden zweiten oder dritten Freiraum 2e eine Tragleiste 28 vorgesehen sein.

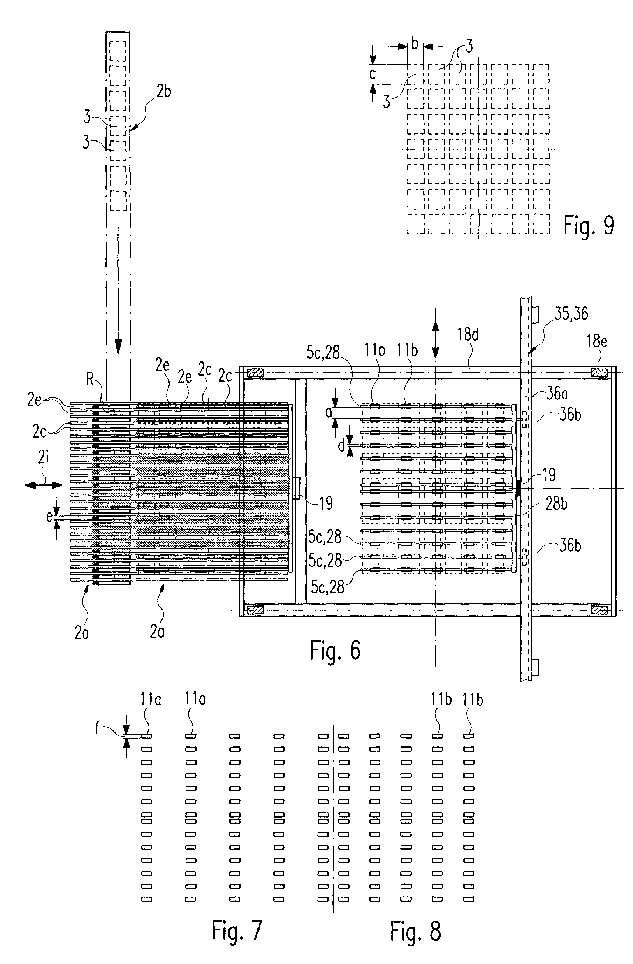

Die vorbeschriebenen und in Fig. 2 und 6 mit R bezeichneten Förderrollen des Horizontalförderers 2b können zum Beispiel durch einen Drehantrieb drehangetrieben sein und Teile einer Hubvorrichtung Rh sein, mit der die Rollen R zwischen einer oberen Förderstellung und einer unteren Bereitschaftsstellung heb- und senkbar sind. In der oberen Förderstellung fördern bzw. abfördern sie die Formlinge 3 vor die Belade- und Entladestation 4a, 4b bzw. von dieser Position. Beim Absenken der Förderrollen R wird die jeweilige Querreihe der Formlinge 3 auf die Tragelemente 2c des Förderers 2a abgesetzt, und die Rollen R gelangen in ihre nicht aktive Bereitschaftsstellung.

Die Vertikalförderer 5, 9 weisen jeweils mehrere, in entsprechenden Längs- und Querabständen voneinander angeordnete Tragleisten 5c, 9c und Tragrollen 11a, 11b auf, die oberseitig die horizontale Führung 7a, 8a bilden, wobei die Tragrollen 11a, 11b in solchen Querabständen voneinander angeordnet sind, dass sie sich jeweils unter der zugehörigen Tragleiste 28 befinden. Die quer gerichtete Dicke f der Tragrollen 11a, 11b des Vertikalförderers 5, 9 entspricht etwa der Dicke d der Tragleisten 28 oder weniger, so dass auch die Tragrollen 11a von unten mit Bewegungsspiel in die Freiräume 2e hinein und wieder heraus bewegbar sind.

Die einander entgegengesetzten horizontalen Förderrichtungen 7b, 8b; der Horizontalförderer 7a, 8a sowie 2a definieren eine Längsrichtung 10 der Vorrichtung 1, in der die Beladestation 4a bzw. Entladestation 4b und die Horizontalförderer 7a, 8a hintereinanderliegend angeordnet sind.

Beim Beladen werden die Formlinge 3 mit dem Formlingsträger 6 von der die Formlinge 3 tragenden Tragebene 2h des horizontalen Förderers 2a angehoben und mit dem Horizontalförderer 8 weitergefördert. Beim Entladen werden die auf dem Formlingsträger 6 befindlichen Formlinge 3 mit dem Horizontalförderer 8 in eine Höhenposition gefördert, in der die Tragfläche 6b des Formlingsträgers 6 oder die Unterseiten der Formlinge 3 sich in gleicher Höhe wie die Tragebene 2h befinden oder geringfügig über der Tragebene 2h befinden, wobei der Formlingsträger 6 dem Vertikalförderer 5 übergeben wird, der den Formlingsträger 6 aus seiner in Fig. 1 dargestellten oberen Position 5o in eine in Fig. 1 angedeutete untere Position 5u absenkt, wobei die Formlinge 3 auf die Tragelemente 2c abgesetzt und mit der horizontalen Fördereinrichtung 2 abgefördert werden.

Beim Ausführungsbeispiel ist somit der Vertikalförderer 5 bzw. 9 durch die Tragrollen 11a bzw. 11b und die Tragleisten 5c bzw. 9c sowie einen Heb- und Senkantrieb 16, 20 gebildet, der zum Beispiel durch einen oder zwei Zylinderkolbenantriebe 16a, 20a gebildet ist, die z. B. am Boden oder einem Gestell der Vorrichtung abgestützt sind und den Vertikalförderer 5 bzw. 9 zwischen der vorbeschriebenen oberen Stellung 5o bzw. 9o und einer unteren Stellung 5u bzw. 9u bewegen. Die untere Hubstellung 5u des Vertikalförderers 5 ist so tief angeordnet, dass ein zugehöriger Formlingsträger 6 mit dem Horizontalförderer 7 in einem nach unten gerichteten Abstand von eventuell auf den Förderelementen 2c liegenden Formlingen 3 zum Vertikalförderer 5 gefördert und diesem übergeben werden kann. Der Vertikalförderer 9 weist wenigstens zwei Hubstellungen auf, die der oberen und der unteren Hubstellung 5o, 5u des Vertikalförderers 5 entsprechen.

Die Horizontalförderer 7, 8 können jeweils einen Förderantrieb oder einen gemeinsamen Förderantrieb 18 aufweisen, wie es beim vorliegenden Ausführungsbeispiel der Fall ist. Der gemeinsame Förderantrieb 18 weist ein Schub- und Zugelement 19 auf, das in der Längsrichtung 10 hin und her verschiebbar gelagert ist und durch eine lösbare Verbindungsvorrichtung 21 mit dem jeweiligen Formlingsträger 6 verbindbar ist, vorzugsweise mit dessen der Formling-Horizontalfördereinrichtung 2 abgewandten und sich quer erstreckenden Rahmenabschnitt 6a. Fig. 1 zeigt das Schub- und Zugelement 19 in seiner zur Belade- bzw. Entladestation 4a, 4b hin bewegten Hubstellung mit durchgezogenen Linien, in der es den Formlingsträger 6 in der Belade- bzw. Entladeposition hält. In der anderen Hubeinstellung ist das Schub- und Zugelement 19 gestrichelt dargestellt, nämlich in einer Stellung, in der es den Formlingsträger 6 als Bewegungselement des Horizontalförderers 8 von der Belade- bzw. Entladestation 4a, 4b weg bewegt hat.

Wenn der Formlingsträger 6 durch mehrere, quer nebeneinander und in einem Querabstand a voneinander angeordnete Formlingsträgerteile, zum Beispiel Tragleisten 28, gebildet ist, bedarf es entsprechend mehrerer Förderantriebe 18 oder Schub- und Zugelemente 19 oder eines gemeinsamen sich quer durchgehend erstreckenden Schub- und Zugelements 19.

Nachfolgend werden beispielhaft Verfahrensschritte zum Beladen und Entladen der Formlinge 3 der soweit beschriebenen Vorrichtung 1 beschrieben.

Ein unbeladener Formlingsträger 6 wird dem Vertikalförderer 9 in dessen oberen oder unteren Hubstellung übergeben und z. B. von diesem nach unten in eine der unteren Hubstellung 5u des Vertikalförderers 5 entsprechenden Hubstellung bewegt und mit dem Schub- und Zugelement 19 des Horizontalförderers 7 in die Förderrichtung 7b zum Vertikalförderer 5 in dessen unteren Hubstellung 5u bewegt. Dies ist möglich, weil das Schub- und Zugelement 19 in die zwei unterschiedlichen Höhenstellungen der Horizontalförderer 7, 8 bewegbar und durch die lösbare Verbindungsvorrichtung 21 mit dem Formlingsträger 6 verbindbar ist. Vorher oder während dieser Horizontalbewegung und der nachfolgenden Aufwärtsbewegung durch den Vertikalförderer 5 können die Formlinge 3 zur Beladestation 4a gefördert werden. Wesentlich ist, dass beim Hochfahren des Formlingsträgers 6 durch den Vertikalförderer 5 die Formlinge 3 sich an der Beladestation 4a befinden und bei ihrer Berührung mit dem Formlingsträger 6 in der Förderrichtung 7b still stehen. Dabei werden die Formlingsträger 6 von unten gegen die Formlinge 3 bewegt, so dass diese von den Tragelementen 2c angehoben werden, siehe Abstand g, oder die Tragelemente 2c von den Formlingen 3 wenigstens entlastet werden. In dieser oberen Hubstellung 5o das Vertikalförderers 5 tritt der Horizontalförderer 8 in Funktion, nämlich beim vorliegenden Ausführungsbeispiel dadurch, dass das Schub- und Zugelement 19 mit dem Formlingsträger 6 verbunden wird und den beladenen Formlingsträger 6 in die Förderrichtung 7a bewegt und dadurch von der Beladestation 4a entfernt. Aus dieser Stellung wird nach einem Lösen der Verbindungsvorrichtung 21 der beladene Formlingsträger 6 direkt oder nach einer Absenkung weiter gefördert, zum Beispiel zu einer Trocknungs- oder Brenneinrichtung für die Formlinge 3. Dies kann z. B. quer, durch einen noch zu beschreibenden Horizontalförderer 35, erfolgen.

Zum Entladen wird jeweils ein beladener Formlingsträger 6 in umgekehrter Weise gefördert, dass heißt zum Beispiel mit dem Schub- und Zugelement 19 des Horizontalförderers 8 zur Entladestation 4b gefördert, wobei sich an der Entladestation 4b befindliche Formlinge 3 vorher abzufördern sind.

Der Formlingsträger kann durch mehrere quer mit Abstand a voneinander angeordnete einzelne Tragleisten 28a gebildet sein. Vorzugsweise sind die Tragleisten 28a endseitig zu einer Gabel miteinander verbunden, z. B. durch wenigstens eine Querleiste 28b.

Auch dieser Verfahrensschritt erfolgt in einer Höhenlage, in der die Formlinge 3 einen vertikalen Abstand g von den Tragelementen 2c aufweisen, oder sich in einer solchen Höhenlage befinden, dass die Tragelemente 2c von den Formlingen 3 entlastet sind. Dabei können - wie bereits beim Beladen - die Formlinge 3, auf den Tragelementen 2c leicht schleifen. Danach wird der Formlingsträger 6 durch den Vertikalförderer 5 in dessen untere Hubstellung 5u abgesenkt, wobei die Formlinge 3 auf die Tragelemente 2c aufgesetzt und abgefördert werden können. Danach erfolgt die Wegförderung des entladenen Formlingsträgers 6 von der Entladestation 4b in die zugehörige Förderrichtung 7 zum Beispiel durch den Horizontalförderer 7 zum Vertikalförderer 9, von wo aus der Formlingsträger 6, z. B. mit dem Förderer 35, weiter abgefördert werden kann.

Es ist aber auch möglich, den Formlingsträger 6 beim Beladen und Entladen soweit zu heben bzw. zu senken, dass seine Tragfläche 6b sich in der Höhe der Tragebene 2h des Zu- bzw. Abförderers 2 befindet, wenn beim Beladen die Zu- und Abförderer 2, 8 aus dem Stillstand gleichzeitig und mit gleicher Fördergeschwindigkeit bewegt werden und beim Entladen der Zuförderer 8 und der Abförderer 2 beim Übergeben der Formlinge 3 an den Abförderer 2 still stehen oder mit gleicher Fördergeschwindigkeit fördern.

Beim vorliegenden Ausführungsbeispiel werden die Horizontalförderer 7 und 8 durch ein und dieselben Bauteile gebildet. Die Horizontalförderer 7 und 8 unterscheiden sich dadurch, dass sie in unterschiedlichen Höhenlagen wirksam sind.

Der gemeinsame Horizontalantrieb 18 kann zum Beispiel ein bandförmiges endloses und um zwei einen Längsabstand voneinander aufweisende Antriebsrollen 18a, 18b umlaufendes Antriebselement 18c gebildet sein, an dem das Schub- und Zugelement 19 befestigt ist und durch einen Antriebsmotor 18e hin und her bewegbar ist. Ein sich längs erstreckender und die Antriebsrollen 18a, 18b lagern der Antriebsrahmen 18d ist in einem vertikalen Abstand über der Beladestation 4a bzw. Entladestation 4b angeordnet sein und sich von dieser horizontal weg erstrecken. Dabei kann der Antriebsrahmen 18d mit zum Beispiel zwei auf jeder Seite angeordneten Stützbeinen 18e höheneinstellbar auf dem vorhandenen Boden stehen und befestigt sein.

In vergleichbarer Weise kann auch der Horizontalförderer 2a zwei oder mehrere auf jeder Seite angeordnete Stützbeine 22 aufweisen, mit denen er zum Beispiel auf dem Boden abgestützt ist.

Die Vorrichtung 1 eignet sich besonders gut zum Beladen und/oder Entladen von Formlingsträgern 6, die aus wenigstens zwei aufeinander angeordneten Tragteilen bestehen, die im Folgenden beschrieben werden.

Ein solcher Formlingsträger 6 besteht aus einem oder mehreren Formlingsträgerteilen 24, das bzw. die Formlinge 3 tragen und einem Basisträgerteil 25, das das wenigstens eine Formlingsträgerteil 24 trägt. Beide Trägerteile 24, 25 sind flache Bauteile, die aufeinandersetzbar und in der aufeinandergesetzten Position gegen ein gegenseitiges Verrutschen wenigstens in einer horizontalen Richtung, die in der Benutzungsstellung in der Vorrichtung 1 deren Längsrichtung 10 entspricht, aneinander arretierbar sind, vorzugsweise formschlüssig aneinander arretierbar sind. Um die Bauhöhe weiter zu vermindern, ist es vorteilhaft, das Basisträgerteil 25 mit nach oben ragenden Halterelementen auszubilden, die Teil einer Steckfassung 26 sind, in die das Formlingsträgerteil 24 von oben einsteckbar und gegen ein relatives horizontales Verschieben sicherbar ist. Dabei ist zu berücksichtigen, dass die formschlüssig wirksame Steckfassung 26 und Arretierung gegen horizontales Verschieben nicht allseitig wirksam sein muss, da aufgrund des Eigengewichts der Formlinge 3 und des Formlingträgerteils 24 und der daraus resultierenden Reibung zwischen Letzterem und dem Basisträgerteil 25 einer horizontalen Verschiebung entgegengewirkt ist. In üblichen Benutzungsfällen reicht es aus, wenn die formflüssige Arretierung der Steckfassung 26 in der Längsrichtung 10 wirksam ist.

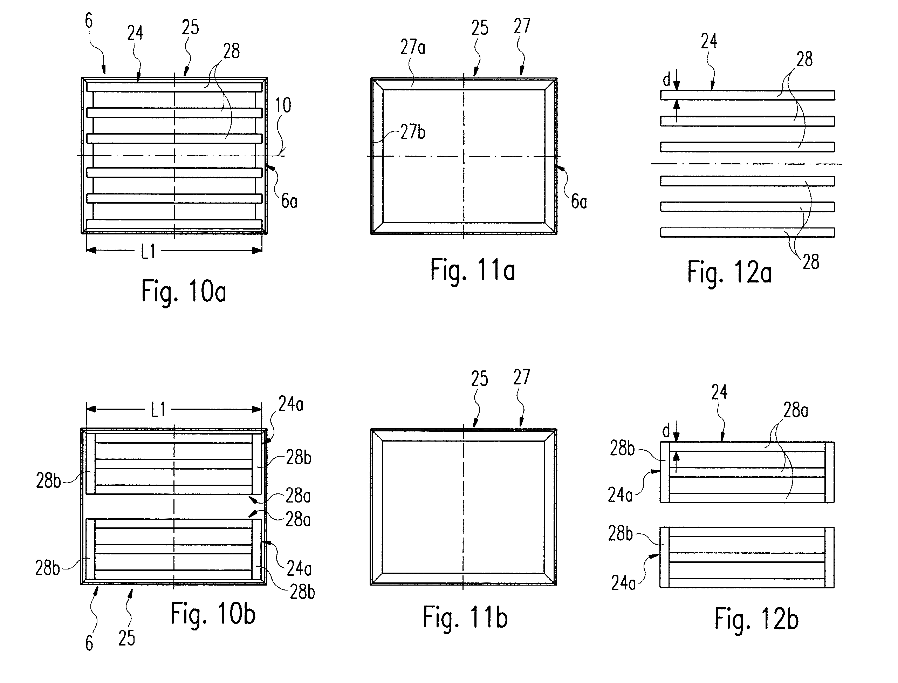

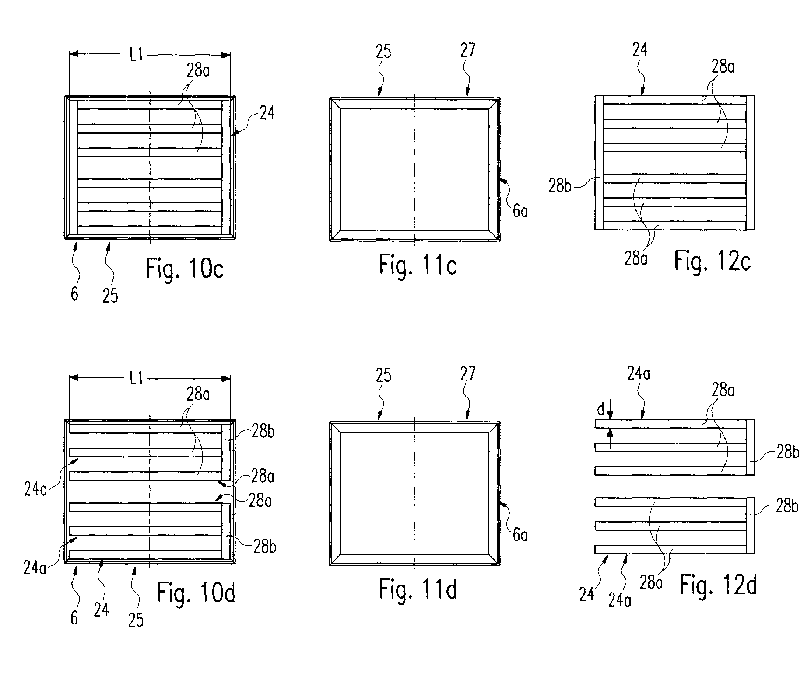

Zur Verwirklichung einer einfachen Steckfassung 26 ist es vorteilhaft, das Basisträgerteil 24 in Form eines Rahmens, vorzugsweise viereckiger Querschnittsform, auszubilden, dessen umfängliche Rahmenabschnitte einen flachen Streifen 27a aufweisen, von dem auf den Umfang verteilt angeordnete Stege 27b nach oben abstehen. Vorzugsweise sind die Rahmenabschnitte durch Winkelprofile gebildet, deren Schenkel die Streifen 27a und Stege 27b bilden. Die Rahmenabschnitte können auf Gehrung geschnitten und unlösbar miteinander verbunden sein, zum Beispiel durch Schweißen. Vorzugsweise sind alle Ausführungsbeispiele gemäß Fig. 10 bis 21 mit einem solchen Rahmen 27 ausgebildet.

Am Ausführungsbeispiel gemäß Fig. 10a, 11a und 12a sind mehrere Formlingsträgerteile 24 in Form von Tragleisten 28a vorhanden, deren Länge L1 um ein Bewegungsspiel kürzer ist als der Innenabstand zu stirnseitig gegenüberliegenden Stegen 27b, so dass in der Längsrichtung der Tragleisten 28a deren formschlüssig wirksame Positionierung gegeben ist. Es sind in der Querrichtung mehrere Tragleisten 28a vorhanden, zum Beispiel sechs Stück.

Beim Ausführungsbeispiel gemäß Fig. 10b, 11b und 12b sind mehrere Tragleisten 28a, zum Beispiel drei Stück, zu einer Tragleisteneinheit 24a miteinander verbunden. Es können zum Beispiel Querleisten 28b vorgesehen sein, die sich an den Stirnenden der Tragleisten 28a erstrecken und mit diesen verbunden sind, zum Beispiel durch Schweißen. Es können mehrere nebeneinander angeordnete Tragleisteneinheiten 24a vorgesehen sein, zum Beispiel zwei Stück, die zwischen sich einen Abstand aufweisen können oder auch nicht. Die Länge der Tragleisteneinheiten 24a entspricht der Länge L1.

Bei der Ausgestaltung gemäß Fig. 10c, 11c und 12c sind alle vorhandenen Tragleisten 28a durch zwei stirnseitige Querleisten 28b zu einer einzigen Tragleisteneinheit 24a zusammengefasst. Die quer gerichtete Länge L1 der Querleisten 28b ist um ein Bewegungsspiel kürzer als die stirnseitig gegenüberliegenden Stege 27b, so dass auch in der Querrichtung die formflüssig wirksame Positionierung der Tragleisteneinheit 28a gewährleistet ist.

Beim Ausführungsbeispiel gemäß Fig. 10d, 11d und 12d können eine Tragleisteneinheit 28a oder zwei oder mehrere quer nebeneinander angeordnete Tragleisteneinheiten 28a jeweils mit einer Querleiste 28b an nur einem Ende der Tragleisten 28a angeordnet sein, so dass die Tragleisten 28a gabelförmig frei abstehen, wobei die sich über die Länge der Tragleisten 28a und die Breite der Querleiste 28b erstreckende Länge der jeweiligen Tragleisteneinheit 24a der Länge L1 entspricht.

Die Ausgestaltungen gemäß Fig. a und 10d eignen sich vorzüglich für Horizontalförderer 2a, die durch mehrere, jeweils einen Freiraum 2e zwischen sich aufweisende Tragelemente 2c gebildet sind. Bei einer solchen Ausgestaltung ist die Dicke d der Tragleisten 28a unter Berücksichtigung eines seitlichen Bewegungsspiels kleiner als die Breite der vorzugsweise gleich großen Freiräume 2e, so dass das entsprechend ausgebildete Formlingsträgerteil 24 mit den gabelförmigen Tragleisten 28a vertikal durch die Freiräume 2e des Horizontalförderers 2a bewegt werden kann, um zu beladen oder zu entladen. Wenn mehrere Tragleisten 28a oder -einheiten 24a unabhängig voneinander quer nebeneinander angeordnet sind, bedarf es entsprechend mehrerer quer nebeneinander angeordneter Schub- und Zugelemente 19, um die Tragleisten 18a oder -einheiten 24a horizontal oder gegebenenfalls auch in andere Richtungen bewegen zu können.

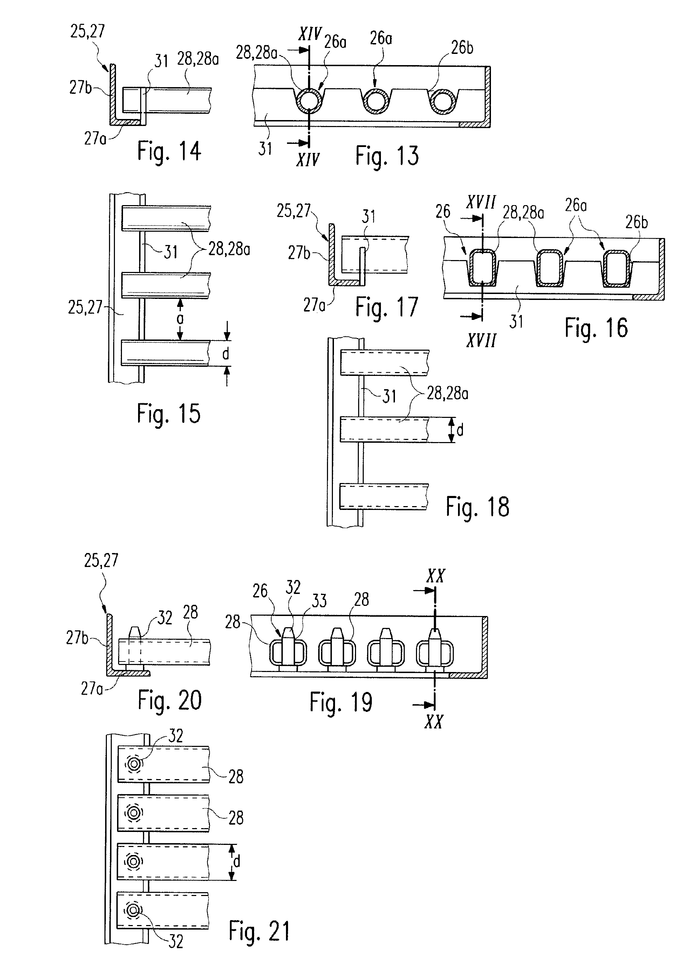

Die Ausführungsbeispiele gemäß Fig. 13 bis 21 zeigen Steckfassungen 26 zum horizontalen Positionieren oder Arretieren von Tragleisten 28a oder Tragleisteneinheiten 24a. Bei diesen Ausgestaltungen weisen einander gegenüberliegende, insbesondere sich quer erstreckende, Rahmenabschnitte sich quer zu den Tragleisten 28a erstreckende Positionierleisten 31 auf, in denen oberseitig offene Steckausnehmungen 26a, vorzugsweise mit nach oben divergenten Ausnehmungsflanken 26b angeordnet sind. Die Divergenz der Ausnehmungsflanken 26b erleichtert das Einstecken der Tragleisten 28a von oben, ohne die Positionierungsgenauigkeit zu beeinträchtigen. Die Querschnittsform der Steckausnehmungen 26a ist gemäß Fig. 13 gerundet, gemäß Fig. 16 eckig, und sie ist im unteren Bereich an die Querschnittsform der Tragleisten 28 angepasst.

Die Tragleisten 28 sind vorzugsweise durch Hohlprofile gebildet, zum Beispiel durch runde oder viereckige bzw. rechteckige Rohre, die flach oder hochkant angeordnet sein können.

Beim Ausführungsbeispiel gemäß Fig. 19 bis 21 sind anstelle von Positionierleisten 31 nach oben abstehende Positionierdorne 32 vorgesehen, auf die die Tragleisten 28a mit entsprechenden Löchern 33 mit Bewegungsspiel aufsteckbar sind. Die Positionierdorne 32 sind vorzugsweise endseitig angespitzt, um das Aufdecken zu erleichtern. Die Positionierdorne 32 können an ihren unteren Enden eine kopfförmige Verdickung aufweisen. Die Positionierleisten 31 oder Positionierdorne 32 können unlösbar befestigt sein, zum Beispiel durch Schweißen.

Bei der in den Zeichnungsfiguren dargestellten Ausgestaltung der Vorrichtung 1 mit zweiteiligen Formlingsträger 6 ist der Formlingsträger-Vertikalförderer 9 dazu eingerichtet, sich mit seinem Förderelement 5a wahlweise in drei unterschiedliche Höhenstellungen zu bewegen, von denen - wie bereits beschrieben - die oberste Höhenstellung der obersten Höhenstellung des Formlingsträgerteil-Vertikalförderers 5 entspricht, die mittlere Höhenstellung der untersten Höhenstellung des Vertikalförderers 5 entspricht und die unterste Höhenstellung nachfolgend noch beschrieben wird. Dabei ist dieser Vertikalförderer 9 einer Belade- und Entladestation 34 für Formlingsträger 6 zugeordnet, die mit den Basisträgerteil 25 und einem oder mehreren Formlingsträgerteilen 24 wenigstens zweiteilig ausgebildet sind. Die Belade- und Entladestation 34 dient dazu, von einem mit Formlingen 3 beladenen Formlingsträger 6 das wenigstens eine Formlingsträgerteil 24 mit den darauf befindlichen Formlingen 3 zu entladen, in der vorbeschrieben Weise dem Vertikalförderer 5 in dessen oberen Hubstellung zuzuführen, durch den Vertikalförderer 5 in dessen untere Hubstellung zu bewegen, wobei die auf dem wenigstens einen Formlingsträgerteil 24 befindlichen Formlinge 3 auf den Horizontalförderer 2a abgesetzt werden, und dem Vertikalförderer 9 in dessen mittleren Hubstellung 9 m wieder zuzufördern, aus der das Formlingsträgerteil 24 durch Absenken des Vertikalförderers 9 in seine untere Hubstellung auf das Basisträgerteil 25 abgesetzt und dieses dadurch wieder beladen wird.

Der Belade- und Entladestation 34 können zur Zuförderung von mit Formlingen 3 beladenen Formlingsträgern 6 und/oder zur Abförderung von entladenen Formlingsträgem 6 geeignete Zu- und/oder Abförderer in unterschiedlichen Konstruktionen und Anordnungen zugeordnet sein. Beim vorliegenden Ausführungsbeispiel ist ein Horizontalförderer 35 vorgesehen, der sich als Zuführungsförderer und/oder Abführungsförderer eignet und in einer Höhenlage angeordnet ist, die tiefer ist als die vorbeschriebene mittlere Hubstellung 9m und höher ist als die untere Hubstellung 9u des Vertikalförderers 9. Der Horizontalförderer 35 weist eine Förderbahn 36 auf, die zum Beispiel durch einander seitlich gegenüberliegende Schienen 36a gebildet ist, auf bzw. in denen die Formlingsträger 6 förderbar sind, zum Beispiel mittels seitlich an den Formlingsträgern 6 angeordneten und drehbar gelagerten Rollen 36d, die zum Beispiel auf seitlich abstehenden Achsen oder Wellen angeordnet sind. Die Schienen 36a können zum Beispiel die Querschnittsform eines seitlich gekippten U aufweisen, in denen die Rollen angeordnet sind. Hierdurch sind die Formlingsträger 6 horizontal und gegen ein Abheben nach oben sowie gegebenenfalls auch seitlich geführt.

Der vertikale Abstand zwischen der mittleren Hubstellung 9m und der unteren Hubstellung 9u ist unter Berücksichtigung der Höhenstellung des, zum Beispiel horizontalen, Förderers 35 so gewählt, dass das Förderelement des Vertikalförderers 9 in seiner unteren Hubstellung 9u einen vorzugsweise geringen vertikalen Abstand von den Tragleisten 12 aufweist. Die mittlere Hubstellung 9m ist so hoch angeordnet, dass beim Hochfahren des Förderelements 9a das Formlingsträgerteil 24 unterseitig höher angeordnet ist als der obere Rand des zum Beispiel rahmenförmigen Basisträgerteils 25 und auch höher als ein gegebenenfalls vorhandenes Trägerteil 37 für die Förderbahn 36. In dieser Höhenstellung kann jeweils das Formlingsträgerteil 24 störungsfrei seitwärts gefördert werden.

Nachfolgend werden beispielhafte Verfahrensschritte jeweils zum Beladen eines Basisträgerteils 25 mit wenigstens einem zugehörigen Formlingsträgerteil 24 oder zum Entladen eines Basisträgerteils 25 von wenigstens einem Formlingsträgerteil 24 beschrieben.

Beim Beladen der Formlinge 3 wird ein leerer Formlingsträger 6 der Belade- und Entladestation 34 zugeführt. Als nächster Verfahrensschritt wird das leere Formlingsträgerteil 24 durch den Vertikalförderer 5 in die mittlere Hubstellung 9o gefördert, dann mit dem Horizontalförderer 7 zum Vertikalförderer 5 gefördert und von diesem in dessen obere Hubstellung 5o gefördert, in der das Formlingsträgerteil 24 die Formlinge 3 vom Horizontalförderer 2a abhebt und dadurch beladen wird. Dann wird das beladene Formlingsträgerteil 24 horizontal zur oberen Hubstellung 9o des Vertikalförderers 9 bewegt, der zwischenzeitlich in diese obere Hubstellung 9a bewegt worden ist. Danach wird das Formlingsträgerteil 24 durch ein Herunterfahren des Vertikalförderers 9 auf bzw. in das Basisträgerteil 25 abgesetzt, wobei das Förderelement 9a des Vertikalförderers 9 in seine untere Hubstellung 9u gelangt.

Zum Entladen der Formlinge 3 wird ein beladener Formlingsträger 6 zur Be- und Entladestation 34 gefördert. Dann wird das beladene Formlingsträgerteil 24 durch den Vertikalförderer 5 nach oben in dessen obere Hubstellung 9o gefördert, wonach das Formlingsträgerteil 24 horizontal zur Entladestation 24b gefördert und dem Vertikalförderer 5 übergeben wird, dessen Förderelement vorher in seine obere Hubstellung 5u bewegt worden ist. Danach wird der Vertikalförderer 5 in seine untere Hubstellung 5u gefahren, wobei die Formlinge 3 selbsttätig auf den Horizontalförderer 2a entladen werden und abgefördert werden können. Aus der unteren Hubstellung 5u kann das entladene Formlingsträgerteil 24 durch den Horizontalförderer 7 zum Vertikalförderer 5 in dessen mittlere Hubstellung 9 m bewegt werden, in die der Vertikalförderer 5 bewegt worden ist. Durch weiteres Herunterfahrens des Vertikalförderers 9 in seine untere Hubstellung 9u wird das Formlingsträgerteil 24 auf bzw. in das Basisträgerteil 25 gesetzt, wonach der entladene Formlingsträger 6 weg gefördert werden kann.

Die Vorrichtung 1 eignet sich dazu, entsprechend groß ausgebildete Formlingsträger 6 mit einem einzigen Formling 3, zum Beispiel einen Ziegel oder eine Fassadenplatte, oder mit mehreren, in Längs- und Querreihen angeordnete Formlinge 3, zum Beispiel entsprechend kleine Ziegel, Wand- oder Bodenplatten, Fliesen oder Dachpfannen, jeweils zu beladen oder zu entladen.

## Patentansprüche

1. Vorrichtung (1) zum Beladen eines Formlingsträgers (6) mit Formlingen (3), mit
- einer Formling-Fördereinrichtung (2) zum etwa horizontalen Zufördern von Formlingen (3) zu einer Beladestation (4a),
- einem Formlingsträger-Förderer (5) zum Zufördern eines Formlingsträgers (6) zur Beladestation (4a) und
- einem weiteren Formlingsträger-Förderer (8) zum Abfördern eines beladenen Formlingsträgers (6) von der Beladestation (4a),
wobei der Formlingsträger-Förderer (5) ein Vertikalförderer ist, dessen Förderelement (5a) aus einer unterhalb der Beladestation (4a) angeordneten unteren Hubstellung (5u) in eine obere Hubstellung (5o) bewegbar ist, in der die Tragfläche (6a) des vom Förderelement (5a) getragenen Formlingsträgers (6) gleich hoch oder höher angeordnet ist als die Tragebene (2h) der Formling-Fördereinrichtung (2).

2. Vorrichtung zum Entladen eines Formlinge (3) tragenden Formlingsträgers (6) von den Formlingen (3), mit
- einem Formlingsträger-Förderer (8) zum Zufördern eines beladenen Formlingsträgers (6) zu einer Entladestation (4b),
- einer Formling-Fördereinrichtung (2) zum Abfördern der Formlinge (3) von der Entladestation (4b), und
- einem vertikalen Formlingsträger-Förderer (5) zum Abfördern des Formlingsträgers (6) von der Entladestation (4b) nach unten,
- wobei der Formlingsträger-Förderer (8) ausgestaltet ist, den beladenen Formlingsträger (6) auf die Tragebene (5b) des vertikalen Formlingsträger-Förderers (5) in dessen oberen Hubstellung (5o) zu fördern, in der die Tragfläche (6b) des vom vertikalen Formlingsträger-Förderer (5) getragenen Formlingsträgers (6) gleich hoch oder höher angeordnet ist als die Tragebene (2h) der Formling-Fördereinrichtung (2).

3. Vorrichtung nach Anspruch 1 oder 2, **dadurch gekennzeichnet, dass** die Formling-Fördereinrichtung (2) eine Mehrzahl langgestreckter und nebeneinander angeordneter Tragelemente (2c) zum Tragen der Formlinge (3) an der Beladestation (4a) aufweist, zwischen denen Freiräume (2e) angeordnet sind, und dass der Formlingsträger (6) mehrere nebeneinander angeordnete Tragleisten (28) für den Formlinge (3) aufweist, die in die Freiräume (2e) passen.

4. Vorrichtung nach Anspruch 3, **dadurch gekennzeichnet, dass** die Tragelemente (2c) der Formling-Fördereinrichtung (2) und die Förderelemente (5a) des vertikalen Formlingsträger-Förderers (5) in der oberen Hubstellung (5o) kammförmig ineinander greifen.

5. Vorrichtung nach einem der vorherigen Ansprüche, **dadurch gekennzeichnet, dass** der weitere Formlingsträger-Förderer (8) zum Abfördern eines beladenen Formlingsträgers (6) ein horizontaler oberer Förderer ist, und dass vorzugsweise seine Förderrichtung (8b) etwa parallel zur Zuführ-Förderrichtung (2i) der Formling-Fördereinrichtung (2) gerichtet ist.

6. Vorrichtung nach einem der vorherigen Ansprüche, **dadurch gekennzeichnet, dass** ein weiterer unterer Formlingsträger-Förderer (7) vorgesehen ist zum horizontalen Zufördern eines unbeladenen Formlingsträgers (6) zum vertikalen Formlingsträger-Förderer (5) in dessen unteren Hubstellung (5u), wobei die Förderrichtung (7b) des unteren horizontalen Formlingsträger-Förderers (7) vorzugsweise parallel zur Förderrichtung (8b) des oberen horizontalen Formlingsträger-Förderers (8) zum Abfördern eines beladenen Formlingsträgers (6) gerichtet ist.

7. Vorrichtung nach Anspruch 6, **dadurch gekennzeichnet, dass** der obere horizontale Formlingsträger-Förderer (8) und der untere horizontale Formlingsträger-Förderer (7) gemeinsame Förderelemente (11a) am Förderelement (5a) am vertikalen Formlingsträger-Förderers (5) aufweisen.

8. Vorrichtung nach Anspruch 7, **dadurch gekennzeichnet, dass** die gemeinsamen Förderelemente durch Rollen gebildet sind.

9. Vorrichtung nach einem der Ansprüche 6 bis 8, **dadurch gekennzeichnet, dass** die horizontalen Formlingsträger-Förderer (7, 8) einen gemeinsamen Förderantrieb (18) aufweisen, der wahlweise mit dem zugehörigen Formlingsträger (6) verbindbar ist.

10. Vorrichtung nach Anspruch 9, **dadurch gekennzeichnet, dass** der gemeinsame Förderantrieb (18) durch wenigstens ein Schub- und Zugelement (19) gebildet ist, das höhenverstellbar mit dem jeweils zugehörigen Formlingsträger (6) verbindbar ist.

11. Vorrichtung nach Anspruch 9 oder 10, **dadurch gekennzeichnet, dass** der gemeinsame Förderantrieb an einem Antriebsrahmen (18b) gelagert ist, der in einem vertikalen Abstand über den oberen horizontalen Formlingsträger-Förderer (8) angeordnet ist.

12. Vorrichtung nach einem der vorherigen Ansprüche,
**dadurch gekennzeichnet,**
**dass** der Formlingsträger (6) aus einem Basisträgerteil (25) und wenigstens einem darauf angeordneten Formlingsträgerteil (24) besteht, das vom Basisträgerteil (25) lösbar, insbesondere abhebbar und wieder absenkbar, ist und oberseitig wenigstens eine Tragfläche (6b) für die Formlinge (3) aufweist.

13. Vorrichtung nach einem der Ansprüche 3 bis 12, **dadurch gekennzeichnet, dass** der Formlingsträger (6) oder das Formlingsträgerteil (24) durch Tragleisten (28) gebildet ist oder Tragleisten (28) aufweist, die von einer Querverbindung gabelförmig abstehen,
wobei die Tragleisten (28) in die Freiräume (2e) zwischen den Tragelementen (2c) passen.

14. Formlingsträger (6) zum Tragen von Formlingen (3) auf einer oberseitigen Tragfläche (6b),
**dadurch gekennzeichnet,**
**dass** der Formlingsträger (6) oder das Formlingsträgerteil (24) durch Tragleisten (28) gebildet ist oder Tragleisten (28) aufweist, die von einer Querverbindung gabelförmig abstehen, wobei die Tragleisten (28) in die Freiräume (2e) zwischen den Tragelementen (2c) passen.

15. Formlingsträger (6) zum Tragen von Formlingen (3) auf einer oberseitigen Tragfläche (6b),
**dadurch gekennzeichnet,**
**dass** der Formlingsträger (6) aus einem Basisträgerteil (25) und wenigstens einem darauf angeordneten Formlingsträgerteil (24) besteht, das vom Basisträgerteil (25) lösbar, insbesondere abhebbar und wieder absenkbar, ist und oberseitig die wenigstens eine Tragfläche (6b) für die Formlinge (3) aufweist.

16. Verfahren zum Beladen eines Formlingsträgers (6) mit Formlingen (3),
- bei dem der Formlingsträger (6) mittels eines Formlingsträger-Förderers (5) und die Formlinge (3) mittels einer horizontalen Formling-Fördereinrichtung (2) zu einer Beladestation (24a) gefördert werden und der Formlingsträger (6) mit den Formlingen (3) beladen wird,
- bei dem der unbeladene Formlingsträger (6) mittels eines vertikalen Formlingsträger-Förderers (5) aus einer unterhalb der Beladestation (4a) angeordneten unteren Hubstellung (5u) gegen die Formlinge (3) und in eine obere Hubstellung (5o) bewegt wird,
- in der die Tragfläche (6b) des vom vertikalen Formlingsträger-Förderer (5) getragenen Formlingsträgers (6) gleich hoch oder höher angeordnet ist als die Tragebene (2h) der Formling-Fördereinrichtung (2)
- und dass dann der **dadurch** mit den Formlingen (3) beladene Formlingsträger (6) von der Beladestation (4a) weg gefördert wird.

17. Verfahren zum Entladen eines Formlinge (3) tragenden Formlingsträgers (6) von den Formlingen (3),
- bei dem der beladene Formlingsträger (6) zu einer Entladestation (4b) gefördert wird,
- an der Entladestation (4b) auf eine Formling-Fördereinrichtung (2) entladen wird,
- und die Formlinge (3) weggefördert werden,
- bei dem der beladene Formlingsträger (6) mittels eines Formlingsträger-Förderers (8) auf einen der Entladestation (4b) zugeordneten vertikalen Formlingträger-Förderer (5) in dessen oberen Hubstellung (5o) gefördert wird,
- in der die Tragfläche (6b) des vom vertikalen Formlingsträger-Förderer (5) getragenen Formlingsträgers (6) gleich hoch oder höher angeordnet ist als die Tragebene (2h) der Formling-Fördereinrichtung (2),
- bei dem dann der vertikale Formlingsträger-Förderer (5) mit dem Formlingsträger (6) in eine untere Hubstellung (5u) abgesenkt wird, in der die Tragfläche (6b) des Formlingsträgers (6) tiefer angeordnet ist als die Tragebene (2h) der Formling-Fördereinrichtung (2),
- und bei dem die dabei auf der Formling-Fördereinrichtung abgesetzten Formlinge (2) mit diesem weg gefördert werden.
